# EUROPEAN PATENT APPLICATION

(11) **EP 0 549 058 A1**
(43) Date of publication of application: **30.06.1993**
(21) Application number: 92203966.4
(22) Date of filing: 16.12.1992
(51) Int. Cl.: A01M 7/00

(54) **Tunnel-like spray device**

(30) Priority: 20.12.1991 NL 9102155; 04.02.1992 NL 9200202
(71) Applicant: Van den Munckhof, Mathijs René Marie Jozef, NL-5961 BH Horst (NL); Van den Munckhof, Peter Marie Josef, NL-5961 AK Horst (NL)
(72) Inventor: Van den Munckhof, Mathijs René Marie Jozef, NL-5961 BH Horst (NL); Van den Munckhof, Peter Marie Josef, NL-5961 AK Horst (NL)
(74) Representative: Prins, Hendrik Willem

(57) **Abstract**

The invention relates to a spray device (1) comprising
a tunnel-like vehicle (3);
a reservoir (21) for spraying agent which is connected via at least one spraying agent conduit to spray nozzles (42) debouching in the tunnel; and
at least one fan (27,28) which is connected via an air conduit (25,26) to at least one air inlet (40) debouching in the tunnel, wherein the air inlet (40) inclines to the rear relative to the travel direction of the vehicle,
and wherein the air flow (45) generated by the air inlet (40) is preferably oriented upward in relation to the ground surface.

## Description

The present invention relates to a spray device comprising
a tunnel-like vehicle;
a reservoir for spraying agent which is connected via at least one spraying agent conduit to spray nozzles debouching in the tunnel; and
at least one fan which is connected via an air conduit to at least one air inlet debouching in the tunnel.

Such a spray device is known from NL-A-88.02164.

The present invention has for its object to provide a spray device with an improved spraying agent dosaging whereby the amount of spraying agent delivered to the plants, in particular bushes and/or trees, is increased, or a smaller dosage can suffice for the same result. This is achieved according to the invention in that the air inlet inclines to the rear relative to the travel direction of the vehicle.

Thus is achieved that an air inlet of greater length can be employed, whereby more air, or the same quantity of air at a lower air speed, can be supplied to the tunnel. An upward deflected portion of the air flow generated by a lower part of the air inlet will moreover, after movement of the spray device, be further supported and carried by the air flow generated by a part of the air inlet at a higher location. The spraying agent is thus carried along in improved manner by a better supported air flow.

This air flow supported in upward direction resulting because the air inlet inclines to the rear and the vehicle moves in the travel direction can be further optimalized when more preferably the air flow generated by the air inlet is oriented upward in relation to the ground surface. Spraying agent carried along in the air flow is thus continually guided to higher regions in the tunnel when it passes over the air inlet. The likelihood of the spraying agent colliding with the plant parts, namely the bottom parts of leaves, is thus greatly improved. Upward orientation of the air flow generated by the air inlet is preferably realized in that the air inlet is provided with a number of guide plates. The guide plates can herein be oriented over the length of the air inlet from the top towards the bottom at an increasing or decreasing angle.

Since in accordance with this preferred embodiment spraying agent is continually displaced to higher regions in the tunnel, it is recommended that the fan be arranged in the higher regions of the tunnel.

In order to provide a spray device whereof the tunnel dimensions, namely the tunnel width, can be adapted to the crop for spraying, it is further recommended that the tunnel be provided on either side with a fan which is connected via an air conduit to the air inlet, wherein the fan preferably debouches into the upper rear portion of a tunnel side wall. This width adjustability of the tunnel is obtained in constructionally optimal manner if in preference the tunnel is constructed from at least two portals each having two telescopic beam parts, in which portals is suspended a tent. The width adjustment of the spray device for use with the crop for spraying, or with a view to the maximum width during road transport, can preferably be realized if more preferably a chassis part connected to the telescopic beam parts of each portal is provided with an extensible transverse wheel.

In order to have as little spraying agent as possible escaping into the environment otherwise than by application to the crop, it is recommended that the tunnel is provided with receiving gutters for spraying agent which connect onto a collection tank for received spraying agent.

A high airspeed is undesirable because the plants or trees for spraying are thereby damaged and the material for atomizing is not atomized finely enough. There is moreover the danger that when the mist has come to lie on the leaves of the crop and has formed small droplets thereon, these spatter off the leaf again due to the strong air flow so that the material for atomizing cannot carry out its desired action properly.

A further object of the present invention is to provide such a device wherein a considerably lower airspeed is employed.

This object is achieved in that at least one fan is accommodated in each of the sides, which are each placed such that during operation they supply air to the centre of the tunnel and atomizers are placed in the travel direction in front of the air inlets of the fans, which extend over substantially the entire width of the fan and over a considerable portion of the height of the sides of the tunnel.

As a result of this step the air inlet has a much larger surface so that in order to be able to deliver a determined flow rate of air the mean airspeed is much lower and the drawbacks of a high airspeed are avoided.

In order to be able to supply sufficient air to such a large air inlet use is preferably made of at least two fans on each side, which are of course preferably placed one beneath the other. In this preferred embodiment high airspeeds also do not occur inside the fans and in the distribution system optionally applied therein. It is hereby possible for the fans to operate at a relatively low speed so that energy consumption is small.

According to a third embodiment the air inlets of the fans are arranged mutually displaced in the direction of travel.

This step results in the fans not blowing counter to each other, thus preventing that both air flows collide with each other in the middle of the portal and that the parts of the plant located in the middle of the portal are not reached properly by the material to be atomized.

According to a following preferred embodiment collecting means are arranged opposite each of the air inlets of the fans for collecting the air flow coming out of the air inlets of the fans and for passing this through to the fan arranged on the relevant side.

A circulation of air is hereby obtained inside the device so that only a small portion of this air comes out of the device. This prevents environmental pollution as a result of air contaminated with the atomized agent, generally insecticide or pesticide, escaping from the device.

Mentioned and other features of the spray device according to the invention will be further elucidated hereinbelow in the light of a non-limiting embodiment given by way of example, while reference is made to the annexed drawing.

In the drawing:
figure 1 shows a perspective schematic view of a spray device during operation;
figure 2 shows a top view of the spray device shown in figure 1;
figure 3 shows schematically an inside view of the right-hand part of the spray device as shown in figure 2;
figure 4 is a perspective, partly broken away view along the arrow IV in figure 3;
figure 5 shows a partially broken away perspective view of a device according to the invention;
figure 6 shows a schematic horizontal section view of a second embodiment of the present invention; and
figure 7 shows a schematic horizontal section view of a third embodiment of the invention.

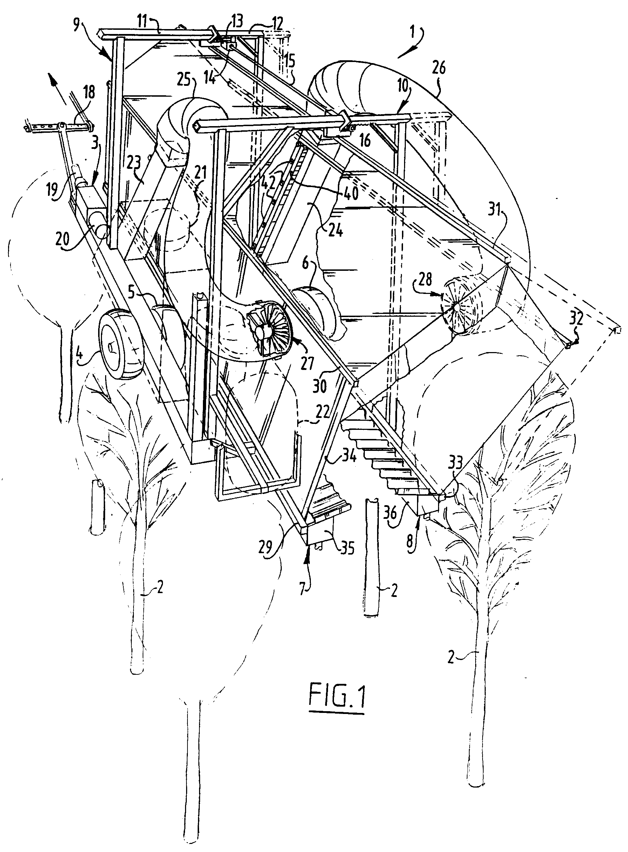

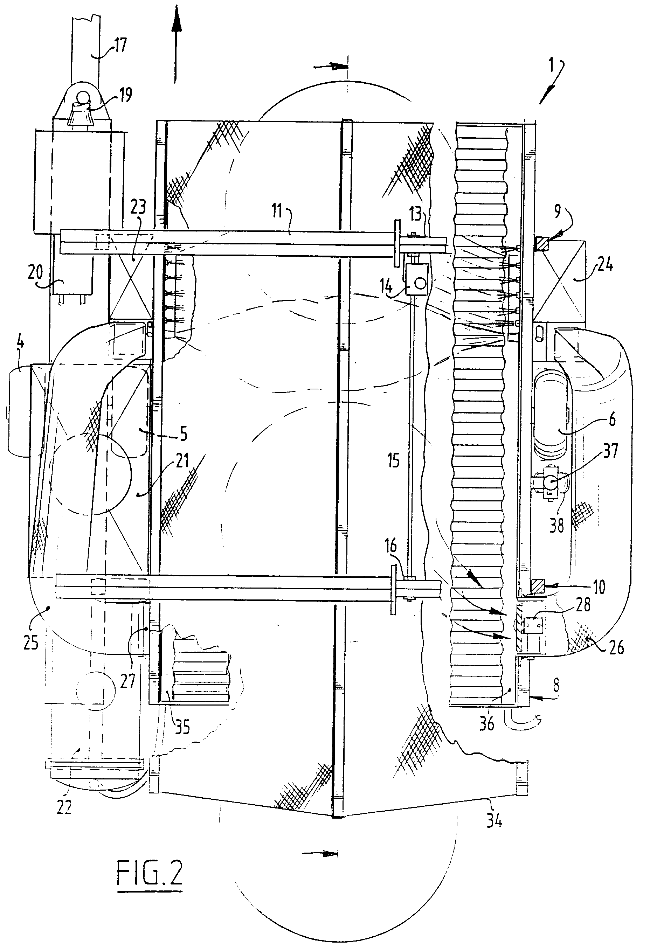

Figures 1 and 2 show the spray device 1 according to the invention for spraying crops such as bushes, shrubs and trees 2. The spray device 1 comprises a tunnel-like vehicle 3 with chassis parts 7 and 8 carried by wheels 4 and 5, respectively 6. The chassis parts 7 and 8 bear two portals 9 and 10 which are each provided with telescopically in and outward slidable parts 11 and 12. The part 12 is provided with a toothed rack 13 and a hydraulic motor 14 engaging thereon which is coupled via a rod 15 to the motor 16 for the portal 10.

The chassis part 7 comprises a linkage part which has a linking angle adjustable via a cylinder (not shown) and which is connected to a drawbar 18 of a tractor (not shown). A drive shaft 19 drives a hydraulic motor 20. This motor 20 is for driving other motors connected thereto via conduits (not shown). The chassis part 7 further carries a reservoir 21 for spraying agent and a reservoir 22 for collected spraying agent.

Both chassis parts 7 and 8 are further provided with an air casing 23, 24 which is connected via a flexible hose 25, 26 to a fan 27, 28. The air casings 23 and 24 and the fans 27 and 28 debouch in a tunnel-like tent 34 suspended and optionally tensioned between the portals 9 and 10 and between rods 29-33. Connected onto the rods 29 and 33 is a gutter 35, 36 which is connected via conduits to the collecting reservoir 22.

Finally, the chassis part 8 is provided with a transverse wheel 38 which can be extended using a cylinder 37 and with which the wheel 6 can be raised and, after energizing of the motors 14 and 16, the width of the tent 34 can be changed.

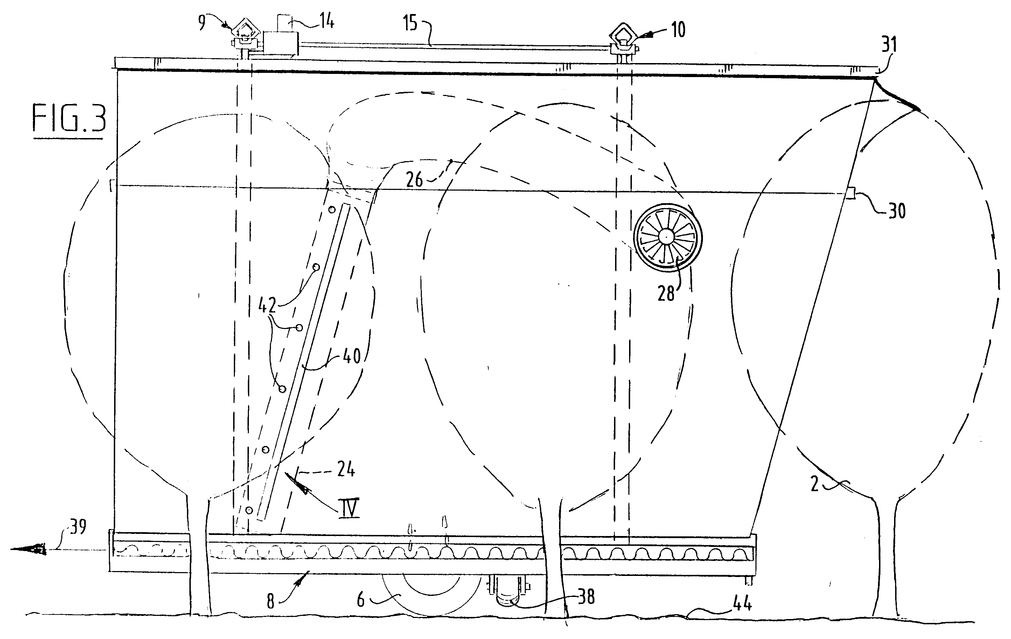

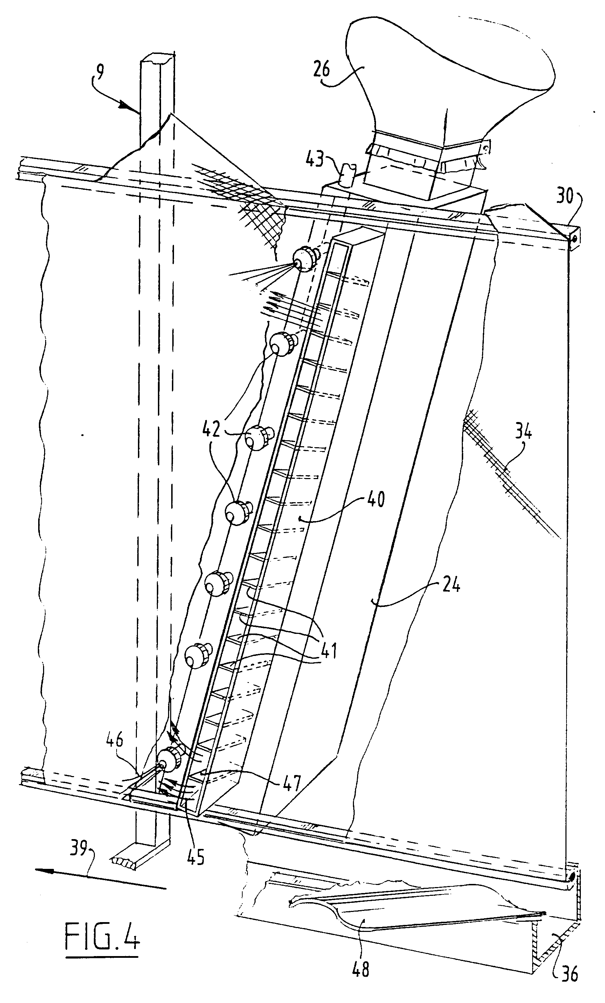

Figures 3 and 4 show clearly the construction of the air casing 24. The air casing 34 is provided with an air inlet 40 inclining to the rear relative to the travel direction 39 and provided over its length with guide plates 41.

Arranged forwardly of the air inlet 40 in the travel direction is a row of spray nozzles 42 which are mutually connected via a spraying agent conduit 43 which debouches into the reservoir 21.

The air flow 45 generated by the air inlet 40 in upward direction relative to the ground surface 44 carries with it in slightly upward direction the jet of spraying agent 46 generated by the spray nozzle 42 due to the displacement of the vehicle in the direction 39. With a further movement of the vehicle spraying agent being carried along will then be supported by the air flow 46 from a part 47 of the air inlet 40 located thereabove and initially therebehind. This process is repeated until the spraying agent reaches the upper part of the tent 34. This spraying agent is drawn from these upper regions using the fans 27 and 28 and fed back in a circuit to the respective air casings 23 and 24. Spraying agent sprayed and collected via the tent 34 or the gutter plates 48 is likewise drained off.

Although the rearward inclining air inlet is only described as one slot-like inlet it will be apparent that use can also be made of a large number of air inlet parts disposed substantially in a line inclining to the rear.

It will further be apparent that the spray device can likewise be embodied as a self-propelling vehicle, in which case the linkage part 17 is replaced by a front wheel and the motor 20 is provided with an energy-exciting or generating unit.

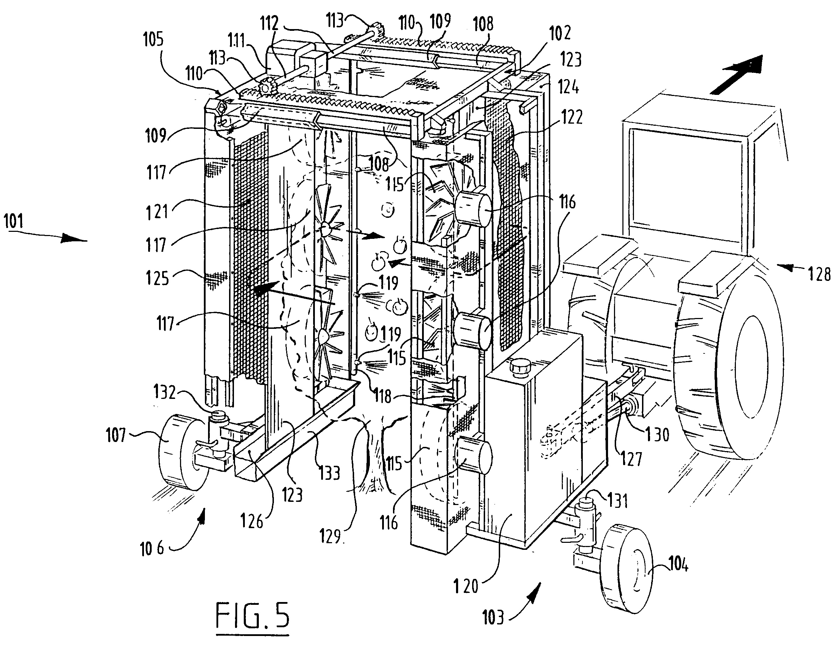

In figure 5 the device 101 according to the invention is formed by a first framework 102 which is connected to a first underframe 103 in which is mounted a wheel 104. Likewise present on the other side is a second frame 105, to the underside of which is fixed a underframe 6 to which a wheel 107 is mounted.

The first frame is provided on its top side with two inwardly extending square rods 108, while the second frame 105 is provided with two inwardly extending rods 109 which however have a larger section. The internal section of the rods 109 is slightly greater than the external section of the rods 108.

Above the two rods 109 are further arranged toothed racks 110 which are connected to the first frame 102. Arranged on top of the second frame 105 is an electric motor 111 which is provided with two output shafts 112 on each outer end of which is arranged a gear wheel 113 which engages with the relevant toothed rack 110. By thus causing the hydraulic motor 111 to rotate the shafts 112 are rotated, as are the gear wheels 113, so that the toothed racks 110 are moved relative to the hydraulic motor 111. As a result the distance between both frames 102, 105 is variable.

Three fans 115 are arranged above each other in the first frame 102, this at the rear side of the frame 102. These fans 115 are each driven by a hydraulic motor 116 and are each likewise fixed in a frame 102 by means of a motor 116. In similar manner three fans 117 are arranged in the second frame 105, which are each driven by means of hydraulic motors (not shown in the drawing). The fans are each fixed such that they debouch with their air inlets directly into the central space between the two sides of the device.

On the leading side in the travel direction of each series of fans 115, 117 respectively a pipe 118 is arranged on which a number of atomizers 119 is arranged. The pipes 118 are in communication with a pump (not shown in the drawing) by means of a hose (not shown), which pump is supplied from the tank 120 arranged on the first frame.

Arranged in the second frame 105 opposite the series of fans 115 is a grid 121, preferably made of plastic while in the first frame a grid 122 is arranged opposite the second series of fans 117. The use of the grids is not per se necessary. However, the grids prevent blown off leaves for example entering the device. Between the first series of fans 115 and the grid 122 is arranged a wall 123 while between the grid 121 and the second series of fans 117 is arranged a partition wall 123. A stretch covering 124 of plastic foil is arranged around the first frame 102 so that a chamber is obtained by this stretch covering 124 together with the fans 115, the wall 123 and the grid 122. This chamber is closed off on the underside by a collecting tray (not shown). A duct is thus formed which connects the feed opening with the inlet side of the relevant fans.

On the other side of the device a similar tunnel is applied. Here the second frame 105 has a stretch covering 125 stretched over it which likewise extends on the front and rear sides and the relevant side of the frame so that here too a chamber is formed by the stretch covering 125, the grid 121, the partition wall 126 and the fans 117. On the underside this chamber is closed off by a collecting tray 126. A corresponding duct is thus created here.

A drawbar 127 is further fixed to the first underframe 103, the angle at which this drawbar extends relative to the frame 103 being adjustable. This makes it possible to have the drawbar extending straight relative to the frame as is shown in the drawing. It is then possible with a tractive vehicle 128 to drive adjacently of the row of crops 129 for treating, but it is likewise possible to have the drawbar 127 extend inclining inward so that the pulling vehicle is situated in the middle of the device, which is important for transport on public highways.

For driving the different energy consuming components, such as the atomizing pump and the pump for collecting liquid received in the collecting tray 125, use is made of hydraulic motors. To generate hydraulic energy use is made of a gear pump which is driven by the power take-off shaft 130 of the tractor.

In order to reduce the width of the vehicle, which is important for transport over public roads, the wheels 107, 104 are mounted such that they can be rotated around shafts 131 and 132 respectively.

The operation of the device according to the invention will now be described. By driving the fans 115, 117 respectively the air flow present in the chambers is directed towards the trees for spraying. Because of the fact that both series of fans 115, 117 are mutually displaced and that a grid 121, 122 respectively is arranged opposite each fan in the opposite wall, an air circulation results such that the most possible use is made of the same air with which the crops are sprayed.

To atomize the material for atomizing, for example insecticides or pesticides, use is made of the atomizers 119 to which the relevant agent 120 present in the tank is supplied by the pump and hoses not shown in the drawing. Because the particular agent is atomized into the air flow, the air current carries the thus created mist along with it and transports it to the crops for spraying.

The portion of the atomized material that is not taken up by the crops passes together with the air through the grid 122, 121 respectively and comes to lie partially on the inside of the stretch covering 124, drips downward and drops into the collecting tray 125. It is supplied therefrom to a collecting tank 133 by means of a hose system (not shown in the drawing). However, a portion of the atomized agent remains present in the air and is then transported again by the fans to the crop for spraying. The amount of material atomized by means of the atomizers 119 can thus be limited while wastage of the agent to be atomized is likewise prevented.

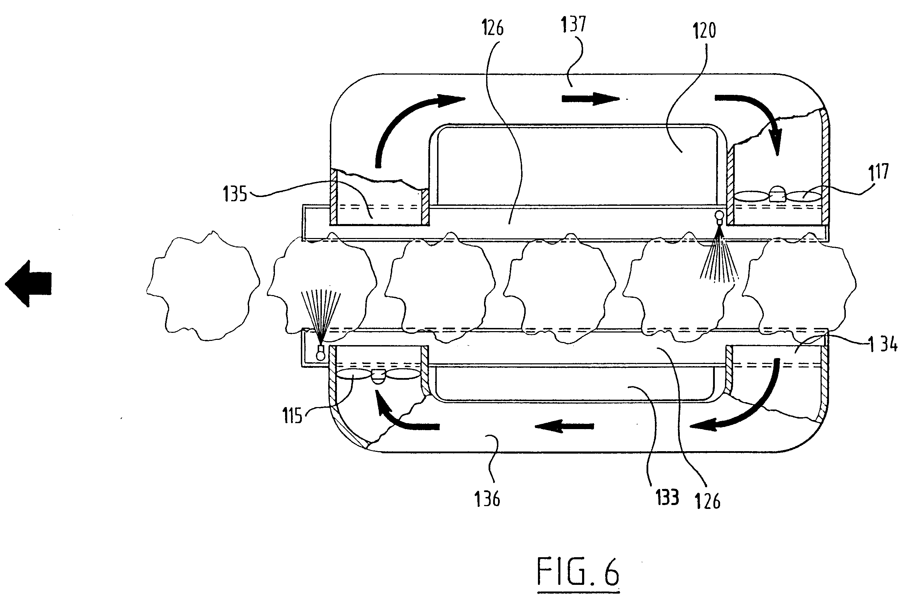

Shown in figure 6 is a cross section of an alternative embodiment wherein the fans 115, 117 are connected to air outlets 134, 135 respectively by means of the respective ducts 136, 137. In this case these ducts are carried respectively around the tank 120 for the liquid for atomizing and the collecting tank 133. It is also important in this case that the passage of the ducts 136, 137 is sufficiently large.

The walls of these ducts 136, 137 can be made of plastics or of other material. The underside of the ducts is formed such that the collected liquid which is deposited onto the walls of the ducts is transported to the collecting trays 126.

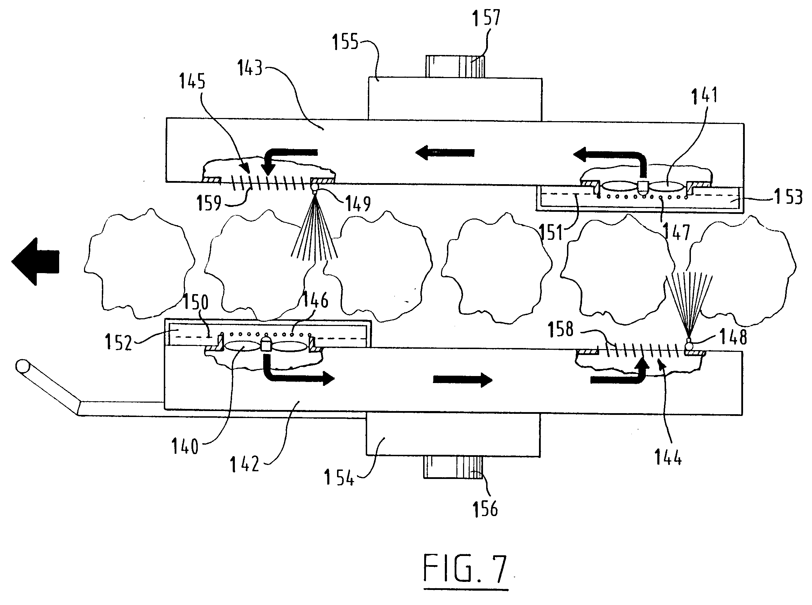

In the embodiment shown in figure 7 the outflow direction of the fans is reversed relative to the first two embodiments. Both fans 140, 141 blow their air into the duct 142, 143 respectively. From the respective ducts 142, 143 the air reaches the air inlets 144, 145 respectively. From the relevant air inlets the air is drawn in by the respective fans 141, 142 located opposite, whereafter the air can proceed on its way.

This embodiment has the advantage over the other two embodiments that the air flows are favourable such that the plants and trees for spraying are damaged considerably less than with the two other embodiments; it is possible herein to realize still lower air flow speeds while retaining good distribution of the liquid for spraying. The liquid for spraying is atomized by atomizers 148, 149 disposed in the vicinity of the air inlets 144, 145 respectively.

In this embodiment a grid 146, 147 is arranged for each of the fans 140, 141 respectively, which prevents the fan being damaged by drawn in objects such as leaves, pieces of branch and the like.

Collecting screens 150 and 151 are further arranged on either side of the fans 140, 141. These collecting screens are formed by fine gauze or by a net-like material. The screens serve to collect the droplets which have not fallen on the plant or tree, which droplets are collected and drip downward along the screen 150, 151 respectively into respective collecting trays 152, 153 arranged thereunder, which have the same function as the collecting trays in the other embodiments.

This embodiment is further provided with two schematically depicted pieces of equipment 154, 155 and wheels 156, 157 respectively, which are likewise shown schematically.

In order to also improve the distribution the air inlets 144, 145 are provided with schematically depicted louvre screens 158, 159 respectively, with which the direction of the air leaving the air inlets can be changed. It is generally recommended that the departing air has a movement component in the direction of forward movement so that the air "arrives on the other side" at the moment that the opposite fan passes thereby. This step results in a good recirculation of the air and thus to a reduction of the contamination of air by atomized particles of the agent for atomizing.

The rotation direction of the fans 140, 141 can further be reversed to enable removal and blowing away of alien objects collected against the gauze 146, 147 respectively.

It is also possible to extend the collecting screens over a fairly large width, particularly on the front side in order therewith to improve still further the collection of the atomized agent. It can also be attractive to embody the shown configuration in mirror image; the above discussed extension can then easily be obtained without the tractive vehicle obstructing extension of the collecting screens.

## Claims

1. Spray device, comprising
a tunnel-like vehicle;
a reservoir for spraying agent which is connected via at least one spraying agent conduit to spray nozzles debouching in the tunnel; and
at least one fan which is connected via an air conduit to at least one air inlet debouching in the tunnel, wherein the air inlet inclines to the rear relative to the travel direction of the vehicle.

2. Spray device as claimed in claim 1, wherein the air flow generated by the air inlet is oriented upward in relation to the ground surface.

3. Spray device as claimed in claim 2, wherein the air inlet is provided with a number of guide plates.

4. Spray device as claimed in claims 1-3, wherein the tunnel is provided on either side with a fan which is connected via an air conduit to the air inlet.

5. Spray device as claimed in claim 4, wherein the fan debouches into the upper rear portion of a tunnel side wall.

6. Spray device as claimed in claims 1-5, wherein the tunnel is constructed from at least two portals each having two telescopic beam parts, in which portals is suspended a tent.

7. Spray device as claimed in claim 6, wherein a chassis part connected to the telescopic beam parts of each portal is provided with an extensible transverse wheel.

8. Spray device as claimed in claims 1-7, wherein the tunnel is provided with receiving gutters for spraying agent which connect onto a collection tank for received spraying agent.

9. Spray device as claimed in claims 1-8, wherein at least one fan is accommodated in each of the sides, which are each placed such that during operation they supply air to the centre of the tunnel and atomizers are placed in the travel direction in front of the air inlets of the fans, which extend over substantially the entire width of the fan and over a considerable portion of the height of the sides of the tunnel.

10. Spray device as claimed in claim 9, wherein the air inlets of the fans on both sides are arranged mutually displaced in the direction of travel.

11. Spray device as claimed in claim 10, wherein substantially opposite each of the air inlets of the fans collecting means are arranged in the opposite wall for receiving the air flow coming out of the air inlets of the fans and for passing it through to the fan arranged on the relevant side.

12. Spray device as claimed in claim 11, wherein in the opposite side directly opposite each air inlet an air outlet is arranged on the inside of the relevant side.

13. Spray device as claimed in claim 9-12, wherein a gauze is placed in front of the air inlets.

14. Spray device as claimed in claim 9-13, wherein means are arranged in the air inlets for supplying a movement component in the travel direction to the exiting gas flow.
